# EUROPEAN PATENT SPECIFICATION

(11) **EP 2 535 850 B1**
(45) Date of publication and mention of the grant of the patent: **23.01.2019**
(21) Application number: 11170205.6
(22) Date of filing: 16.06.2011
(51) Int. Cl.: G01S 1/72, G06Q 10/08, G06K 7/10

(54) **Logistic terminal with loading dock areas suitable to identify objects**
Logistikverladestation mit Ladedockbereichen zur Identifizierung von Objekten
Terminal logique avec zones de quai de chargement adaptées pour identifier les objets

(43) Date of publication of application: 19.12.2012
(73) Proprietor: Deutsche Post AG, 53113 Bonn (DE)
(72) Inventor: Blasco, Santiago, 50019 Zaragoza (ES); Cano, Juan Manuel Antón, 28341 Madrid (ES); Monje, Rodrigo Gómez, 19003 Guadalajara (ES); Sánchez, Mariano Crespo, 28810 Villalbilla Madrid (ES); Mortalla, Sánchez Alberto, 28021 Madrid (ES)
(74) Representative: dompatent von Kreisler Selting Werner - Partnerschaft von Patent- und Rechtsanwälten mbB

(56) References cited:
- WO-A2-02/01467
- DE-A1- 10 342 767
- US-A1- 2003 174 099
- US-A1- 2005 212 660
- US-A1- 2009 150 013
- REZA A W ET AL: "Objects tracking in a dense reader environment utilising grids of RFID antenna positioning", INTERNATIONAL JOURNAL OF ELECTRONICS, TAYLOR AND FRANCIS.LTD. LONDON, GB, vol. 96, no. 12, 1 December 2009 (2009-12-01), pages 1281-1307, XP008146735, ISSN: 0020-7217, DOI: 10.1080/00207210903089056

## Description

### Filed of the invention

The invention relates to a logistic terminal suitable to prevent loading of objects to wrong transport vehicles and to a method to operate such system.

### Background of the invention

The business success of a logistic chain depends on the time required to transport the right object from the sender to the recipient. Therefore all processes contributing to the logistic chain should be made as effective as possible. In case of transportation processes of multiple objects from a warehouse to a receiver or another warehouse or logistic hub, a key factor for an efficient logistic process is the loading of the right objects into the assigned transport vehicles at a logistic terminal. A reliable loading process is very important to provide a reliable and fast delivery service. Objects loaded or intended to be load to the wrong transport vehicles cause a large handling effort due to back transport to the logistic terminal and subsequent second delivery. The recognition of the wrongly placed objects and the subsequent removal of these objects from the amount of objects to be loaded into a particular transport vehicle at the logistic terminal is desirable.

Document WO 2007/022802 A1 discloses an installation to monitor the content of a storage area applying RFID technology. RFID reader antennas are arranged at a portal, which has to be passed by the to-be-transported objects transferred from an internal area of the warehouse to an external area, e.g. a storage area, a truck or a container. The antennas are suitable arranged to detect the direction of the movement of the objects (from or to the internal area of the warehouse). However the portal with RFID reader antennas has to be passed with the objects typically transported by forklifts causing a bottleneck for the access of forklift or other industrial truck carrying the objects to the loading area. Furthermore the installed portal cannot be re-arranged on demand, especially if the portal is a common door to the internal area of the warehouse. In case of multiple loading docks assigned to different transport vehicles present in the loading area accessible via such a portal, the detected objects entering the loading area still can be loaded to the wrong transport vehicles without notifying such a failure by the disclosed installation.

Document US 2009/150013 A1 discloses airport ground traffic management methods, program products and systems provided for a plurality of tags or tag readers distributed throughout an airport each spaced greater than a tag reader scanning distance. A traveling apparatus brings a tag proximate to a tag reader and a traffic manager in communication with the tag reader receives tag data and determines an apparatus location characteristic and formats the characteristic into a presentation provided to an apparatus operator or an airport ground traffic controller. Campus regions are identified in response to an airport campus function characteristic, and an apparatus location is plotted within a region on a graphic representation. In response to location, speed, historic data, data from other read tag and the location of another apparatus, a determined course of action is determined including entering a movement directive into an auto-pilot component.

Document US 2005/212660 A1 discloses a method and apparatus for transmitting a narrow signal beam that allows the precise location of RFID tags to be determined and reduces tag collisions. It further relates to a method and apparatus for combing an RFID reader with an optical source to visualize the interrogation zone of the reader. The present invention also relates to a method and apparatus for improving the efficiency of RFID systems.

### Summary of the invention

It is an object of the invention to provide a logistic terminal preventing the load of objects to wrong transport vehicles not intended to transport these objects while maintain random access of industrial trucks to the loading area.

This object is solved by a logistic terminal comprising at least one loading area with a loading surface accessible for industrial trucks to place objects intended to be loaded to transport vehicles on top of this loading area, wherein the objects intended to be loaded to transport vehicles comprise RFID-tags providing characteristic information suitable to identify the objects, wherein the loading area comprises at least one array of RFID readers suitably arranged within or underneath the loading surface not to hamper the industrial trucks entering the loading surface and wherein at least a part of the array of RFID readers defines a separate loading dock area for collecting all objects to be loaded to a particular transport vehicle and provides a radio-frequency signal suitable to read-out the characteristic information of the RFID tags of the objects placed within the loading dock area in order to identify the objects not assigned to this loading dock area, where the radio-frequency signal provided by the RFID readers defining a particular loading dock area has a spatial distribution essentially vertical to the loading surface with an opening angle of less than 30 degrees suitable to at least significantly reduce signal crosstalk with the radio frequency signals from other RFID readers defining other loading docks areas enabling to distinguish between adjacent objects placed on top of different loading dock areas located close together without applying cross-talk elimination procedures, wherein a RF power emitted by the RFID readers is adjusted to provide a maximum detection distance of two meters for read-out the RFID-tags, wherein the RFID readers are connected to a computer system controlling the loading process of objects within the warehouse, the computer system is arranged to adapt size and shape of the loading dock area on demand by modifying the number and location of the RFID readers within the array of the RFID readers being assigned to this loading dock area, where RFID readers located between different loading dock areas are switched off

An industrial truck according to the present invention is a wheeled vehicle commonly used in a plant or distribution center, in a loading dock area and in some cases also in the yard or on construction sites, to pick up, transport and deposit single loads, e.g. from storage racks towards transport vehicles. Industrial trucks may be powered manually, electrically, by gasoline or by propane. One typical example of an industrial truck is a forklift truck also known as a "forklift," "lift truck" or "counterbalanced lift truck". A forklift truck is a material handling vehicle designed to move loads by means of steel fingers or forks inserted under a load. Other examples of industrial trucks are pallet jacks, walkie stackers, pallet trucks, platform trucks, straddle trucks, reach trucks, Turret trucks, order picker or side loader.

The term "logistic terminal" denotes any area, where objects are stored for further transportation and transported from a storage area to a loading area in order to load the objects into transport vehicle. The logistic terminal might be a logistic hub or a warehouse to further distribute objects to other hubs, logistic terminals, warehouses or to the recipients. Objects according to the present invention might be any type of objects suitable to be stored in a storage rack. The objects might be arranged separately on shelves of the storage racks or might be located as multiple objects on top of a carrying pallet.

Radio-frequency identification (RFID) is a technology that uses communication through the use of radio waves to exchange data between a reader (RFID reader) and an electronic tag (RFID-tag) for purpose of identification and tracking. The RFID technology makes it possible to provide a unique identifier as machine-readable content of an attached RFID-tag to an object, e.g. an identifying number as the unique identifier. The RFID tags do not require line of sight in order of being read-out by a corresponding RFID reader. Therefore it is possible to place RFID tag inside a case, carton, box or other suitable containers defining the objects to be identified via the attached or inserted RFID-tags. The RFID tags comprise at least two parts: one is an integrated circuit for storing and processing information, e.g. the characteristic information to identify the object, for modulating and demodulating a radio-frequency (RF) signal and other functions. The other part is an antenna for receiving and transmitting RFID-signals, especially the characteristic information. RFID tags can be either passive (using no battery), active (with an on-board battery allowing to send out signals actively) or battery assisted passive tags comprising a small battery on board activated when being in presence of an RFID reader. The RFID readers according to the present invention are so-called fixed RFID readers being in a stationary position able to provide interrogation zones (areas, where RFID tags can be read by RFID readers) allowing a very defined reading area for RFID-tags going in and out of the interrogation zone. The interrogation zone provided by the RF energy emitted from the RFID readers defines the loading dock area, where the objects are placed for being loaded into the transport vehicles. The RFID readers allow a bulk identification of several objects in parallel. With adjusting the RF power emitted by the RFID readers, the maximum distance enabling the read-out of RFID-tags can be varied between several meters and several centimeters. For the current invention, the radio-frequency signal send-out by the RFID readers provides a maximum detection distance of 2 meters. The antennas of the RFID readers are preferably suitably shaped to provide a send-out radio-frequency signal with a spatial distribution essentially vertical to the loading surface suitable to at least significantly reduce signal crosstalk with the radio frequency signals from other RFID readers defining other loading docks areas. Suitable RF antennas may be inverted F-shape antennas, slot-type antennas with slots adapted to the emitting distribution, waveguide antennas, or other grounded antennas. The angle of the emitting coil of the RF signal depends on the opening angle of the antenna. With suitably shaped antennas, emitting coils with opening angles of less than 30 degrees leading to a send-out radio-frequency signal with a spatial distribution essentially vertical to the loading surface. The antennas may be made of steel or other suitable material. Subsequently only the objects essentially placed on top of the area occupied by the RFID readers are read-out. With such antennas of the RFID readers, different loading dock areas located close together execute the identification of the objects placed on top of these loading dock areas separately without the need of applying advanced signal analysis comprising cross-talk elimination procedures to distinguish between adjacent objects placed within different loading dock areas.

The loading dock area is defined by the involved RFID readers out of the array of the RFID readers. In one embodiment the complete array may define one loading dock area. In another embodiment, the array of RFID readers may cover the loading area completely or to a large extend. Than the loading area may be divided into several loading dock areas by assigning a first part of the array of RFID readers to a first loading dock area and a second part of the array of the RFID readers to a second loading dock area. The number of the loading dock areas may differ for different logistic terminals or different time periods within one logistic terminal. The RFID readers of the array of RFID readers located between the different loading dock areas are switched off in order to provide separated active sub-areas of the array of RFID readers defining separate loading dock areas. The computer system is arranged to adapt size and shape of the loading dock area on demand by modifying the number and location of the RFID readers within the array of the RFID readers being assigned to this loading dock area. To be able to control the shape and size of loading dock areas, the RFID readers are connected to the computer system. Here the required number and size of the loading dock areas can be adapted dynamically to the expected amount of objects to be transported to further optimize the loading process resulting in an improved loading efficiency. In an embodiment the RFID readers of the array of RFID readers are covered with a robust material or are arranged underneath the robust material, which is suitable to carry industrial trucks and/or objects placed on top of the robust material and to allow the radio-frequency signal to penetrate through the loading surface.

For executing the loading into the transport vehicles, the objects are placed in a certain loading area in order to collect all objects to be loaded into a particular transport vehicle. In order to enable a fast loading process the loading area is divided into loading dock areas assigned to a certain transport vehicle or to a certain loading ramp, where a particular transport vehicle will be positioned in front of. All objects within one loading dock area will be loaded into the corresponding truck in front of the loading ramp assigned to this loading dock area. Without any control procedure objects wrongly placed onto the loading dock area will subsequently be loaded into the wrong transport vehicle. The invention provides a logistic terminal, where the load of objects to wrong transport vehicles not intended to transport these objects is prevented and simultaneously a random access of industrial trucks to the loading area is maintained avoiding any access bottlenecks, since the loading dock areas are defined by an array RFID readers or a part of the RFID readers of the array, which are arranged within the loading surface of the loading area. Therefore the industrial trucks can drive any path within the loading area to access the loading dock area enabling an undisturbed (not hampered) traffic of industrial trucks within the loading area transporting objects to the same or different loading dock areas. The objects will be recognized via the RFID tags attached to each object when placed on top of the loading dock area regardless of the transport direction of the industrial trucks carrying the objects from the storage area of the logistic terminal to the loading area improving on one hand the reliability of the loading process and on the other hand accelerating the loading process being able to place the objects faster within the loading dock area due to various (random) access paths to the loading dock areas.

The RFID readers are connected to a computer system controlling the loading process of objects within the logistic terminal. The computer system of the logistic terminal may provide delivery orders to the industrial trucks. Therefore the computer system is connected to the industrial truck with a wireless technology. The connection could be established by a mobile communication system connected to the warehouse computer system and sending out the delivery orders created by the warehouse computer system to the drivers of the industrial truck carrying headphones suitable to receive the delivery orders. The delivery orders comprise at least one object to be collected, e.g. removed from the storage rack, and transported to a specified loading dock area by an industrial truck. To be sure, that the objects are placed onto the specified loading dock area, the computer system has to be connected to the RFID readers providing the characteristic information identifying the read-out objects. In a preferred embodiment the RFID readers within the loading dock area transmit the read-out characteristic information to the computer system, which comprises a data base storing at least one loading list specifying the objects, the assignment of the objects to the loading dock area and the corresponding characteristic information to identify the objects, and a comparing unit comparing the read-out characteristic information of the RFID-tags of the objects placed within the loading dock area with the characteristic information of the objects assigned to this loading dock area in the loading list.

In an embodiment a loading control unit connected to the computer system is suitably arranged to provide a first signal as response to a warning signal provided by the comparing unit of the computer system in case of detecting at least one object placed on top of the loading dock area which is not assigned this loading dock area. In accordance to the first signal provided by the loading control unit, the loading stuff is able to select the wrongly placed objects out of the amount of right placed objects to avoid loading wrong objects into transport vehicles assigned to the particular loading dock area. The first signal can be any kind of a characteristic visible or acoustic signal. People skilled in the art will chose the appropriate signal in dependence of the situation within the logistic terminal.

In a preferred embodiment the loading control unit is arranged to provide a second signal as response to a confirmation signal provided by the comparing unit of the computer system in case of placing objects on top of the loading dock area which are assigned to this loading dock area. The second signal demonstrates to all present people in the neighborhood of the loading dock area, that there is no need for further handling within this loading dock area, since the present objects are all at the intended location. The second signal can be any kind of a characteristic visible or acoustic signal. People skilled in the art will chose the appropriate signal in dependence of the situation within the logistic terminal.

In another embodiment the loading control unit is arranged at each loading dock area or in each industrial truck placing objects on top of loading dock areas. A loading control unit being visibly arranged provides the best attention to present people whether they have to take action in response to a first signal. In case of loading control units present in the industrial truck placing the objects on top of the loading dock area, the driver can immediately recognize his failure or success in case of provided first or second signals and can take immediately the required actions (re-arranging the objects or entering the storage are to transport the next objects to the loading area).

In another embodiment the loading control unit comprises a display suitable to display information about the objects causing the first signal enabling the removal of the object from the loading dock area. This information helps the driver of an industrial truck to deliver the wrongly placed object to the right loading dock areas as fast as possible. Therefore the display displays the intended loading dock area for the object causing the first signal provided by the computer system within the warning signal in another embodiment.

The computer system is part of the warehouse computer system to manage the warehouse (warehouse management system). Furthermore the computer system may also be connected to a transport management system or part of the transport management system. In another embodiment the warehouse management system and the transport management system are operated by the computer system. The transport management system may provide arrival times of transport vehicles to the logistic terminal. In response to the provided arrival times the computer system may trigger a re-arrangement of objects placed within the loading dock areas or between different loading dock areas. Such re-arrangement may be announced by the display of the loading control unit to advice the workers or drivers of the industrial trucks to re-arrange the placed objects. The re-arrangement within the same loading dock area may result in a changed sequence of the placed objects, where the sequence is adapted in accordance to the expected arrival times of the transport vehicles. The re-arrangement of objects to other loading dock areas may result from a change of the loading dock areas assigned to industrial vehicles due to changed arrival times. The computer system is adapted to dynamically assign other loading dock areas to the objects currently transported from the storage area to the loading dock area. Also a change of the list of objects to be transported with a certain transport vehicle executed by the warehouse management system, where the computer system is at least a part of, may result in a required re-arrangement of placed objects. This kind of re-arrangement will also be executed as described above. Additionally, the warehouse management system change the size of the loading dock areas on demand. To indicate the intended size of the loading dock area, the loading dock area might be equipped with an array of light sources, e.g. LEDs, suitable to emit light of different colors, where the computer system is suitable to control the color of the LEDs and the number and position of the LEDs within the array of the LEDs to indicate the intended loading dock area or the intended boundary of the loading dock area as response to a corresponding advise provided by the warehouse management system (e.g. in form of a corresponding control signal). The array of light sources, e.g. LEDs, might be arranged within or underneath the loading surface suitable to emit light through the loading surface comprising a transparent area above the light sources. In an alternative embodiment the array of light source, e.g. LEDs, is arranged on the roof above the loading dock areas to illuminate the intended loading dock areas from the top. In another embodiment the RFID readers each comprise a light source, e.g. one or more LEDs, to indicate the loading dock area. This provides a wide flexibility in defining loading dock areas of any size and shape on demand.

The invention further relates to a method to operate a logistic terminal according to the present invention comprising the steps of
- Entering a loading surface of a loading area with an industrial truck carrying objects intended to be loaded to transport vehicles, wherein the objects comprise RFID-tags providing characteristic information suitable to identify the objects;
- Placing the objects on top of an array of RFID readers by the industrial trucks, where at least a part of the RFID readers defines a loading dock area for collecting all objects to be loaded to a particular transport vehicle, where the array of RFID readers is suitably arranged within or underneath the loading surface;
- Reading-out the characteristic information of the RFID tags of the objects placed within the loading dock area in order to identify the objects not assigned to this loading dock area with a radio-frequency signal provided suitably by the RFID readers assigned to the loading dock area, where the radio-frequency signal provided by the RFID readers defining a particular loading dock area has a spatial distribution essentially vertical to the loading surface with an opening angle of less than 30 degrees suitable to at least significantly reduce signal crosstalk with the radio frequency signals from other RFID readers defining other loading docks areas and where a RF power emitted by the RFID readers is adjusted to provide a maximum detection distance of two meters for read-out the RFID-tags enabling to distinguish between adjacent objects placed on top of different loading dock areas located close together without applying cross-talk elimination procedures;
- Adapting size and shape of the loading dock area on demand by modifying the number and location of the RFID readers within the array of the RFID readers being assigned to this loading dock area by a computer system, wherein the RFID readers are connected to the computer system controlling the loading process of objects within the warehouse; and
- Switching off RFID readers located between different loading dock areas.

In an embodiment the method further comprises the steps of
- transmitting the read-out characteristic information of the RFID-tags to the computer system connected to the RFID readers; and
- comparing the characteristic information of the read-out RFID tags with a loading list stored in a data base of the computer system specifying assignment of the objects to the loading dock area and the corresponding characteristic information.

In another embodiment the method further comprises the step of providing a first signal by a loading control unit connected to the computer system as response to a warning signal provided by the comparing unit of the computer system in case of detecting at least one object placed on top of the loading dock area which is not assigned to this loading dock area.

In another embodiment the method further comprises the step of providing a second signal by the loading control unit as response to a confirmation signal provided by the comparing unit of the computer system in case of placing objects on top of the loading dock area which are assigned to this loading dock area.

In another embodiment the method further comprises the step of displaying information to the objects causing the first signal with a display of the loading control unit enabling the removal of the object from the loading dock area, preferably additionally displaying the intended loading dock area for the object causing the first signal provided by the computer system within the warning signal.

### Brief description of the drawings

These and other aspects of the invention will be apparent from and elucidated with reference to the embodiments described hereinafter.
- Fig.1:: shows an embodiment of the logistic terminal according to the present invention.
- Fig.2:: shows the embodiment of figure 1 in a side view.
- Fig.3:: shows an embodiment of the method to operate the logistic terminal according to the present invention.

### Detailed description of embodiments

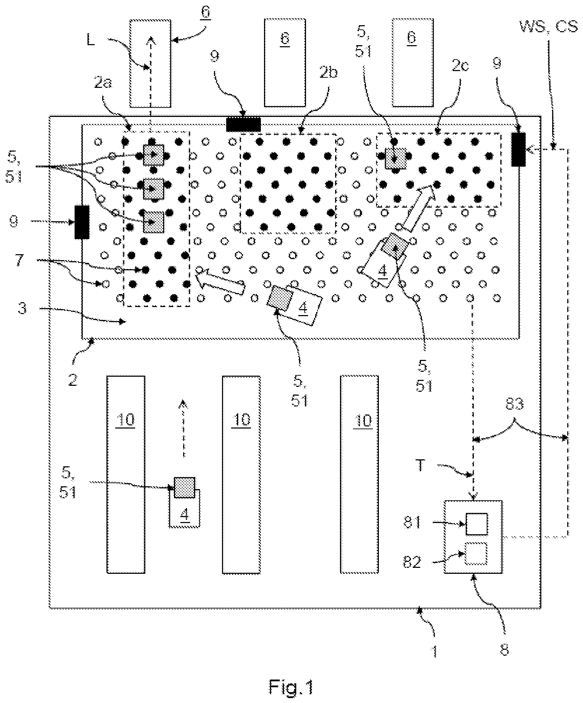

Figure 1 shows an embodiment of the logistic terminal 1 according to the present invention. The logistic terminal 1 comprises a loading area 2 with a loading surface 3 accessible for industrial trucks 4 to place objects 5 intended to be loaded L to transport vehicles 6 on top of this loading area 2. The objects 5 comprise RFID-tags 51 providing characteristic information suitable to identify the objects 5, which can be attached to the outer surface of the objects 5 or might be inserted in the objects 5. The loading area 2 comprises an array of RFID readers 7 indicated by the open and closed circles. Only two RFID readers are indicated with the numeral "7" as an example. The RFID readers 7 are suitably arranged within or underneath the loading surface 3 not to hamper the industrial trucks 4 entering the loading surface 3 from a storage area 10, here indicated by three storage racks 10. The industrial trucks 4 are free to drive (indicated by the big arrows) any suitable path (route) on the loading area 2 to place the objects 5 onto the intended loading dock area 2a - 2c. A part of the RFID readers 7 of the array of RFID readers 7 defines three separate loading dock areas 2a, 2b, 2c assigned to objects 5 to be loaded L to the three particular transport vehicle 6 in front of the loading dock areas 2a,2b, 2c. The computer system 8 may additionally indicate the loading dock areas 2a, 2b, 2c visually by switching on LEDs arranged as an array within the loading surface 3. This array of LEDs may be a separate array within the loading surface 3 or may be established be installing or connecting one or more LEDs to each of the RFID readers 7. The computer system 8 might be arranged to illuminate the entire loading dock area 2a, 2b, 2c be switching on all LEDs within this loading dock area 2a, 2b, 2c or might be arranged to just illuminate the boundary of the loading dock area 2a, 2b, 2c by switching on all LEDs located at the intended boundary of the loading dock area 2a, 2b, 2c. The RFID readers 7 indicated as black circles provide a radio-frequency signal RF suitable to read-out RO the characteristic information of the RFID tags 51 of the objects 5 placed within the loading dock areas 2a, 2b, 2c in order to identify the objects 5 not assigned to this loading dock area 2a, 2b, 2c. This read-out information is transmitted T to the computer system 8 connected to the RFID readers 7 with a data connection 83 (here only indicated for one RFIOD reader as a example). The computer system 8 comprises a data base 81 storing at least one loading list specifying the objects 5, the assignment of the objects 5 to the loading dock area 2a, 2b, 2c and the corresponding characteristic information to identify the objects 5 and a comparing unit 82 comparing the read-out characteristic information of the RFID-tags 51 of the objects 5 placed within the loading dock area 2a, 2b, 2c with the characteristic information of the objects 5 assigned to this loading dock area 2a, 2b, 2c in the loading list. Depending on the result of this comparison a loading control unit 9 connected to the computer system 8 provides a first signal FS as response to a warning signal WS provided by the comparing unit 82 of the computer system 8 in case of detecting at least one object 5 placed on top of the loading dock area 2a, 2b, 2c which is not assigned this loading dock area 2a, 2b, 2c. In case of placing objects assigned to this loading dock area 2a, 2b, 2c onto the loading dock area 2a, 2b, 2c, the loading control unit 9 provides a second signal SS in response to a confirmation signal CS received from the comparing unit 82 of the computer system 8. The loading control units in this embodiment are arranged at the sides of the loading dock areas 2a, 2b, 2c. Alternatively the loading control units 9 might also be arranged inside the industrial trucks 4. To provide an eye-catching first or second signal, the loading control units 9 may comprise a display, preferably also displaying the right loading dock area 2a, 2b, 2c in case of a wrongly placed object 5

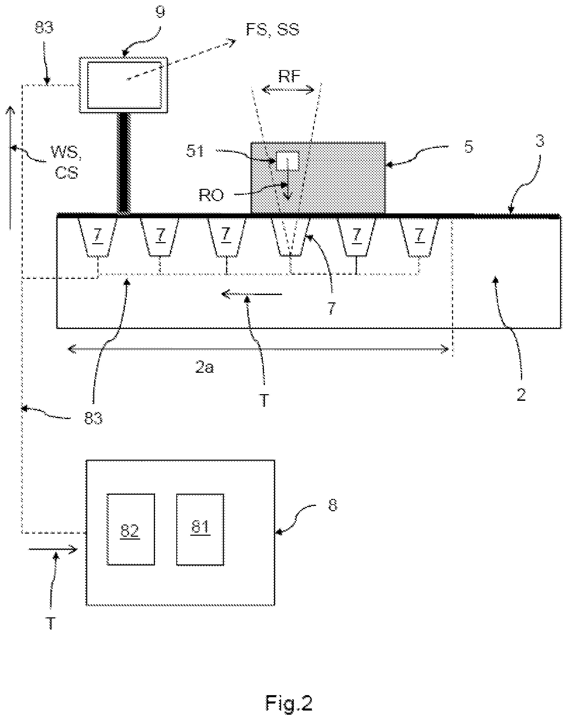

Fig.2 shows the embodiment of figure 1 in a side view. The RFID readers 7 are arranged underneath the loading surface 3 (indicated as bold black line) of the loading area 2. The RFID readers 7 define the loading dock area 2a, where an object 5 is placed on top. The RFID readers emit a RF signal as indicated by the dashes lines labeled with "RF". The RFID-tag 51 attached to the object 5 present within the emitting cone of the RF signal (conical spatial distribution of the RF signal emitted from the RFID reader) comprising the characteristic information identifying the object is read-out RO be the RFID readers 7. The read-out information is transmitted T to the computer system 8 comprising the comparing unit 82 and the data base 81 via a data connection 83 connecting the RFID readers 7 with the computer system 8. The loading control unit 9 connected to the computer system 8 via data connections 83 provides either a first signal FS or a second signal SS in response to the warning signal WS (wrongly placed object) or the confirmation signal CS (right placed object, correct loading dock area for this object). The loading control unit might be arranged at the loading dock area as a display attached to the wall or attached to a pole suitable to be seen by the driver of the industrial truck or other people working in this area.

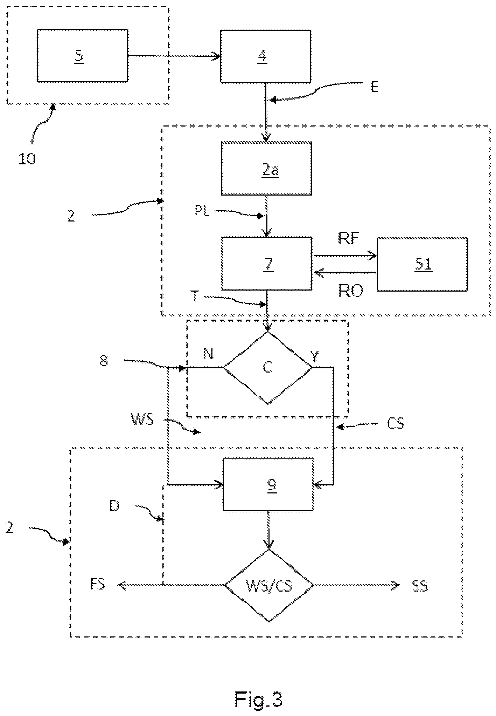

Fig.3 shows an embodiment of the method to operate the logistic terminal 1 according to the present invention. After collecting an object 5 from the storage area 5, the industrial truck 4 carrying this object 5 enters E the loading area 2. Within the loading area 2, the object 5 is placed on top of a loading dock area 2a defined by RFID readers 7 out of an array of RFID readers 7. After having placed the object on top of the loading dock area 2a, the RFID tag 51 attached to the object 5 is read-out RO in response to the send-out RF signal by the RFID readers 7. The read-out characteristic information is transmitted T to the computer system 8, where the comparing unit compares the transmitted read-out characteristic information with the corresponding characteristic information present in the loading list specifying the objects assigned to the loading dock area 2a, where the object 5 is placed on top. In case of the read-out characteristic information is found for a particular object in the corresponding loading list, the computer 8 sends out a confirmation signal CS to the loading control unit 9 in order to confirm, that the object 5 is well placed on top of the right loading dock area 2a. In case of the read-out characteristic information is not found for a particular object in the corresponding loading list, the computer 8 sends out a warning signal WS to the loading control unit 9 in order to indicate, that the object 5 is wrongly placed on top of the loading dock area 2a and shall be further transported to another loading dock area. In response to the warning / confirmation signals WS/CS the loading control unit 9 sends-out (provide) a first or second signal FS, SS to indicate the driver of the industrial truck 4 and/or the people present within this area that the object 5 has to be removed from this particular loading dock area (first signal) or that they can continue with the loading process as planned (second signal). The first and/or second signals might be visual or acoustic signals of any suitable type of signals. When the loading control unit is arranged as a display, it displays D the information corresponding to the objects 5 causing the first signal FS specifying the intended loading dock area for the object 5, which is also provided by the computer system 8 within the warning signal WS.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### LIST OF NUMERALS

- 1: logistic terminal
- 2: loading area
- 2a - 2c: loading dock area
- 3: loading surface
- 4: industrial truck
- 5: object
- 51: RFID-tag attached to or inserted in the object
- 6: transport vehicles
- 7: RFID readers
- 8: computer system
- 81: data base of the computer system
- 82: comparing unit of the computer system
- 83: data connection
- 9: loading control unit
- 10: storage area
- C: comparing the read-out characteristic information with stored data
- CS: confirmation signal
- D: displaying information of objects causing first signals
- E: entering the loading area with industrial trucks
- FS: first signal
- L: loading objects to a transport vehicle
- PL: placing objects on top of the loading surface / array of RFID readers
- RF: radio-frequency signal
- RM: removal of wrongly placed objects
- RO: reading-out the RFID tags
- SS: second signal
- T: transmitting the read-out characteristic information to the computer system
- WS: warning signal

## Claims

1. A warehouse (1) comprising at least one loading area (2) with a loading surface (3) accessible for industrial trucks (4) to place objects (5) on top of this loading area (2), wherein the objects (5) intended to be loaded (L) to transport vehicles (6) comprise RFID-tags (51) providing characteristic information suitable to identify the objects (5),
**characterized in that,**
the loading area (2) comprises at least one array of RFID readers (7) suitably arranged within or underneath the loading surface (3) not to hamper the industrial trucks (4) entering the loading surface (3) and wherein at least a part of the array of RFID readers (7) defines a separate loading dock area (2a, 2b, 2c) for collecting all objects (5) to be loaded (L) to a particular transport vehicle (6) and provides a radio-frequency signal (RF) suitable to read out the characteristic information of the RFID tags (51) of the objects (5) placed within the loading dock area (2a, 2b, 2c) in order to identify the objects (5) not assigned to this loading dock area (2a, 2b, 2c), where the radio-frequency signal (RF) provided by the RFID readers (7) defining a particular loading dock area (2a) has a spatial distribution essentially vertical to the loading surface (3) with an opening angle of less than 30 degrees suitable to at least significantly reduce signal crosstalk with the radio frequency signals (RF) from other RFID readers (7) defining other loading docks areas (2b, 2c) enabling to distinguish between adjacent objects (5) placed on top of different loading dock areas (2a, 2b, 2c) located close together without applying cross-talk elimination procedures, wherein a RF power emitted by the RFID readers (7) is adjusted to provide a maximum detection distance of two meters for read-out the RFID-tags (51), wherein the RFID readers (7) are connected to a computer system (8) controlling the loading process of objects (5) within the warehouse (1), the computer system (8) is arranged to adapt size and shape of the loading dock area (2a, 2b, 2c) on demand by modifying the number and location of the RFID readers (7) within the array of the RFID readers (7) being assigned to this loading dock area (2a, 2b, 2c), where RFID readers (7) located between different loading dock areas are switched off.

2. The warehouse (1) according to claim 1,
**characterized in that,**
the RFID readers (7) within the loading dock area (2a, 2b, 2c) transmit (T) the read-out characteristic information to the computer system (8), which comprises a data base (81) storing at least one loading list specifying the objects (5), the assignment of the objects (5) to the loading dock area (2a, 2b, 2c) and the corresponding characteristic information to identify the objects (5), and a comparing unit (82) comparing the read-out characteristic information of the RFID-tags (51) of the objects (5) placed within the loading dock area (2a, 2b, 2c) with the characteristic information of the objects (5) assigned to this loading dock area (2a, 2b, 2c) in the loading list.

3. The warehouse (1) according to claim 2,
**characterized in that,**
a loading control unit (9) connected to the computer system (8) is suitably arranged to provide a first signal (FS) as response to a warning signal (WS) provided by the comparing unit (82) of the computer system (8) in case of detecting at least one object (5) placed on top of the loading dock area (2a, 2b, 2c) which is not assigned this loading dock area (2a, 2b, 2c).

4. The warehouse (1) according to claim 3,
**characterized in that,**
the loading control unit (9) is arranged to provide a second signal (SS) as response to a confirmation signal (CS) provided by the comparing unit (82) of the computer system (8) in case of placing objects (5) on top of the loading dock area (2a, 2b, 2c) which are assigned to this loading dock area (2a, 2b, 2c).

5. The warehouse (1) according to claim 3 or 4,
**characterized in that,**
the loading control unit (9) is arranged at each loading dock area (2a, 2b, 2c) or in each industrial truck (4) placing objects (5) on top of loading dock areas (2a, 2b, 2c).

6. The warehouse (1) according to one of the claims 3 to 5,
**characterized in that,**
the loading control unit (9) comprise a display suitable to display (D) information about the objects (5) causing the first signal (FS) enabling the removal of the object (5) from the loading dock area (2a, 2b, 2c), preferably the display displays the intended loading dock area (2a, 2b, 2c) for the object (5) causing the first signal (FS) provided by the computer system (8) within the warning signal (WS).

7. The warehouse (1) according to any of the preceding claims,
**characterized in that,**
the complete array of RFID readers (7) define one loading dock area.

8. A method to operate a warehouse (1) according to claim 1 comprising the steps of
- Entering (E) a loading surface (3) of a loading area (2) with an industrial truck (4) carrying objects (5) intended to be loaded (L) to transport vehicles (6), wherein the objects (5) comprise RFID-tags (51) providing (P) characteristic information suitable to identify the objects (5);
- Placing (PL) the objects (5) on top of an array of RFID readers (7) by the industrial trucks, where at least a part of the RFID readers (7) defines a loading dock area (2a, 2b, 2c) for collecting all objects (5) to be loaded (L) to a particular transport vehicle (6), where the array of RFID readers (7) is suitably arranged within or underneath the loading surface (3);
- Reading-out (RO) the characteristic information of the RFID tags (51) of the objects placed within the loading dock area (2a, 2b, 2c) in order to identity the objects (5) not assigned to this loading dock area (2a, 2b, 2c) with a radio-trequency signal (RF) provided suitably by the RFID readers (7) assigned to the loading dock area (2a, 2b, 2c), where the radio-frequencv signal (RF) provided bv the RFID readers (7) defining a particular loading dock area (2a) has a spatial distribution essentially vertical to the loading surface (3) with an opening angle of less than 30 degrees suitable to at least significantly reduce signal crosstalk with the radio frequency signals (RF) from other RFID readers (7) defining other loading docks areas (2b, 2c) and where a RF power emitted bv the RFID readers (7) is adjusted to provide a maximum detection distance of two meters for read-out the RFID-tags (51) enabling to distinguish between adjacent objects (5) placed on top of different loading dock areas (2a. 2b. 2c) located close together without applying cross-talk elimination procedures;
- Adapting size and shape of the loading dock area (2a, 2b, 2c) on demand by modifying the number and location of the RFID readers (7) within the array of the RFID readers (7) being assigned to this loading dock area (2a, 2b, 2c) by a computer system (8), wherein the RFID readers (7) are connected to the computer system (8) controlling the loading process of objects (5) within the warehouse (1); and
- Switching off RFID readers (7) located between different loading dock areas.

9. The method according to claim 8, further comprising the steps of
- transmitting (T) the read-out characteristic information of the RFID-tags (51) to the computer system (8) connected to the RFID readers (7); and
- comparing (C) the characteristic information of the read-out RFID tags (51) with a loading list stored in a data base (81) of the computer system (8) specifying assignment of the objects (5) to the loading dock area (2a, 2b, 2c) and the corresponding characteristic information.

10. The method according to claim 9, further comprising the step of providing a first signal (FS) by a loading control unit (9) connected to the computer system (8) as response to a warning signal (WS) provided by the comparing unit (82) of the computer system (8) in case of detecting at least one object (5) placed on top of the loading dock area (2a, 2b, 2c) which is not assigned to this loading dock area (2a, 2b, 2c).

11. The method according to claim 10, further comprising the step of providing a second signal (SS) by the loading control unit (9) as response to a confirmation signal (CS) provided by the comparing unit (82) of the computer system (8) in case of placing objects (5) on top of the loading dock area (2a, 2b, 2c) which are assigned to this loading dock area (2a, 2b, 2c).

12. The method according to claim 10 or 11, further comprising the step of displaying (D) information to the objects (5) causing the first signal (FS) with a display of the loading control unit (9) enabling the removal (RM) of the object (5) from the loading dock area (2a, 2b, 2c), preferably additionally displaying the intended loading dock area (2a, 2b, 2c) for the object (5) causing the first signal (FS) provided by the computer system (8) within the warning signal (WS).

## Patentansprüche

1. Lagerhalle (1), aufweisend zumindest einen Ladebereich (2) mit einer Ladezone (3), die für Lastkraftwagen (4) zum Platzieren von Objekten (5) auf der Oberseite des Ladebereichs (2) zugänglich ist, wobei die auf Transportfahrzeuge (6) zu verladenden (L) Objekte (5) RFID-Markierungen (51) aufweisen, die charakteristische Informationen umfassen, die zum Identifizieren der Objekte (5) geeignet sind,
**dadurch gekennzeichnet, dass**
der Verladebereich (2) zumindest ein Array von RFID-Lesevorrichtungen (7) aufweist, die in geeigneter Weise innerhalb oder unterhalb der Ladezone (3) angeordnet sind, um die Lastkraftwagen (4), die in die Ladezone (3) einfahren, nicht zu behindern, und wobei zumindest ein Teil des Arrays von RFID-Lesevorrichtungen (7) eine gesonderte Ladedockfläche (2a, 2b, 2c) zum Einsammeln aller auf ein spezielles Transportfahrzeug (6) zu verladender (L) Objekte (5) definiert und ein Funkfrequenzsignal (RF) bereitstellt, das zum Auslesen der charakteristischen Informationen der RFID-Markierungen (51) der Objekte (5), die innerhalb der Ladedockfläche (2a, 2b, 2c) platziert werden, geeignet ist, um die Objekte zu identifizieren, die dieser Ladedockfläche (2a, 2b, 2c) nicht zugeordnet sind, wobei das Funkfrequenzsignal (RF), das von den RFID-Lesevorrichtungen (7) bereitgestellt wird und das eine spezielle Ladedockfläche (2a) definiert, eine räumliche Verteilung im Wesentlichen vertikal zur Ladezone (3) mit einem Öffnungswinkel von weniger als 30 Grad hat, geeignet ist, Signalüberlagerung mit den Funkfrequenzsignalen (RF) anderer RFID-Lesevorrichtungen (7), die andere Ladedockbereiche (2b, 2c) definieren, welche eine Unterscheidung zwischen benachbarten Objekten (5) erlauben, die auf der Oberseite unterschiedlicher, nahe beieinander liegender Ladedockflächen (2a, 2b, 2c) platziert sind, ohne das Anwenden von Überlagerungsbeseitigungsverfahren zumindest deutlich zu reduzieren, wobei eine von den RFID-Lesevorrichtungen (7) emittierte RF-Leistung eingerichtet ist, eine maximale Detektionsstrecke von zwei Metern zum Auslesen der RFID-Markierungen (51) bereitzustellen, wobei die RFID-Lesevorrichtungen (7) mit einem Computersystem (8) zum Steuern der Beladevorgänge von Objekten (5) innerhalb der Lagerhalle (1) verbunden sind, wobei das Computersystem (8) eingerichtet ist, Größe und Form der Ladedockfläche (2a, 2b, 2c) nach Aufforderung durch Modifizieren der Anzahl und des Aufenthaltsorts der RFID-Lesevorrichtungen (7) innerhalb des Arrays von RFID-Lesevorrichtungen (7), die dieser Ladedockfläche (2a, 2b, 2c) zugeordnet sind, anzupassen, wobei RFID-Lesevorrichtungen (7), die sich zwischen unterschiedlichen Ladedockflächen befinden, ausgeschaltet werden.

2. Lagerhalle (1) nach Anspruch 1,
**dadurch gekennzeichnet, dass**
die RFID-Lesevorrichtungen (7) innerhalb der Ladedockfläche (2a, 2b, 2c) die ausgelesenen, charakteristischen Informationen an das Computersystem (8), übertragen (T), das eine Datenbank (81) aufweist, die zumindest eine Beladeliste speichert, die die Objekte (5), die Zuordnung der Objekte (5) zum Ladedockbereich (2a, 2b, 2c) und die entsprechenden charakteristischen Informationen zum Identifizieren der Objekte (5) angibt, und eine Vergleichseinheit (82), die die ausgelesenen, charakteristischen Informationen der RFID-Markierungen (51) der Objekte (5), die innerhalb der Ladedockfläche (2a, 2b, 2c) platziert werden, mit den charakteristischen Informationen der Objekte (5), die dieser Ladedockfläche (2a, 2b, 2c) in der Beladeliste zugeordnet sind, vergleicht.

3. Lagerhalle (1) nach Anspruch 2,
**dadurch gekennzeichnet, dass**
eine mit dem Computersystem (8) verbundene Beladesteuerungseinheit (9) in geeigneter Weise angeordnet ist, um ein erstes Signal (FS) als Reaktion auf ein von der Vergleichseinheit (82) des Computersystems bereitgestelltes Warnsignal (WS) bereitzustellen, im Falle des Detektierens von zumindest einem Objekt (5), das auf der Oberseite der Ladedockfläche (2a, 2b, 2c) platziert ist, welches dieser Ladedockfläche (2a, 2b, 2c) nicht zugeordnet ist.

4. Lagerhalle (1) nach Anspruch 3,
**dadurch gekennzeichnet, dass**
die Beladesteuerungseinheit (9) angeordnet ist, um ein zweites Signal (SS) als Reaktion auf ein von der Vergleichseinheit (82) des Computersystems (8) bereitgestelltes Bestätigungssignal (CS) bereitzustellen, im Falle des Platzierens von Objekten (5) auf der Oberseite der Ladedockfläche (2a, 2b, 2c), welche dieser Ladedockfläche (2a, 2b, 2c) zugeordnet sind.

5. Lagerhalle (1) nach Anspruch 3 oder 4,
**dadurch gekennzeichnet, dass**
die Beladesteuerungseinheit (9) an jeder Ladedockfläche (2a, 2b, 2c) oder in jedem Lastkraftwagen (4) angeordnet ist, der Objekte (5) auf der Oberseite von Ladedockflächen (2a, 2b, 2c) platziert.

6. Lagerhalle (1) nach einem der Ansprüche 3 bis 5,
**dadurch gekennzeichnet, dass**
die Beladesteuerungseinheit (9) eine Anzeige aufweist, die geeignet ist zum Anzeigen (D) von Informationen über die Objekte (5), die das erste Signal (FS) veranlassen, das Entfernen der Objekte (5) von der Ladedockfläche (2a, 2b, 2c) zu ermöglichen, bevorzugt die Anzeige die beabsichtigte Ladedockfläche (2a, 2b, 2c) für das Objekt anzeigt, das das erste, von dem Computersystem (8) innerhalb des Warnsignals (WS) bereitgestellte Signal (FS) veranlasst.

7. Lagerhalle (1) nach einem der vorstehenden Ansprüche,
**dadurch gekennzeichnet, dass**
das vollständige Array von RFID-Lesevorrichtungen (7) eine Ladedockfläche definiert.

8. Verfahren zum Betreiben eines Lagers (1) nach Anspruch 1, umfassend die Schritte:
- Befahren (E) einer Ladezone (3) eines Verladebereichs (2) mit einem Lastkraftwagen (4), der auf Transportfahrzeuge (6) zu verladende (L) Objekte (5) trägt, wobei die Objekte (5) RFID-Markierungen (51) aufweisen, die charakteristische Informationen bereitstellen (P) die zum Identifizieren der Objekte (5) geeignet sind;
- Platzieren (PL), durch die Lastkraftwagen, der Objekte (5) auf der Oberseite eines Arrays von RFID-Lesevorrichtungen (7), wobei zumindest ein Teil der RFID-Lesevorrichtungen (7), eine Ladedockfläche (2a, 2b, 2c) zum Einsammeln aller auf ein spezielles Transportfahrzeug (6) zu verladender (L) Objekte (5) definiert, wobei das Array von RFID-Lesevorrichtungen (7) geeigneterweise innerhalb oder unterhalb der Ladezone (3) angeordnet ist,
- Auslesen (RO) der charakteristischen Informationen der RFID-Markierungen (51) der innerhalb der Ladedockfläche (2a, 2b, 2c) platzierten Objekte, um die Objekte (5) zu identifizieren, die dieser Ladedockfläche (2a, 2b, 2c) nicht zugeordnet sind, mit einem Funkfrequenzsignal (RF), das geeigneterweise von den der Ladedockfläche (2a, 2b, 2c) zugeordneten RFID-Lesevorrichtungen (7) bereitgestellt wird, wobei das von den RFID-Lesevorrichtungen (7) bereitgestellte Funkfrequenzsignal (RF), das eine spezielle Ladedockfläche (2a) definiert, eine im Wesentlichen vertikale räumliche Verteilung zur Ladezone (3) mit einem Öffnungswinkel von weniger als 30 Grad hat, der geeignet ist, um Signalüberlagerung mit den Funkfrequenzsignalen (RF) von anderen RFID-Lesevorrichtungen (7), die andere Ladedockflächen (2b, 2c) definieren, deutlich zu reduzieren, und wobei eine von den RFID-Lesevorrichtungen (7) emittierte Leistung eingestellt ist, eine maximale Detektionsstrecke von zwei Metern zum Auslesen der RFID-Markierungen (51) bereitzustellen, was eine Unterscheidung zwischen benachbarten Objekten (5), die auf der Oberseite unterschiedlicher Ladedockflächen (2a, 2b, 2c) platziert werden und sich nahe beieinander befinden, ohne das Anwenden von Überlagerungsbeseitigungsverfahren erlaubt;
- Anpassen von Größe und Form der Ladedockfläche (2a, 2b, 2c) nach Bedarf, durch Modifizieren von Anzahl und Ort der RFID-Lesevorrichtungen (7) innerhalb des Arrays der RFID-Lesevorrichtungen (7), die dieser Ladedockfläche (2a, 2b, 2c) zugeordnet sind, durch ein Computersystem (8), wobei die RFID-Lesevorrichtungen (7) mit dem Computersystem (8) verbunden sind, das den Verladevorgang von Objekten (5) innerhalb der Lagerhalle (1) steuert; und
- Ausschalten der RFID-Lesevorrichtungen (7), die sich zwischen unterschiedlichen Ladedockflächen befinden.

9. Verfahren nach Anspruch 8, ferner umfassend die folgenden Schritte:
- Senden (T) der ausgelesenen, charakteristischen Informationen der RFID-Markierungen (51) an das mit den RFID-Lesevorrichtungen (7) verbundene Computersystem (8); und
- Vergleichen (C) der charakteristischen Informationen der ausgelesenen RFID-Markierungen (51) mit einer in einer Datenbank (81) des Computersystems (8) gespeicherten Ladeliste, die eine Zuordnung der Objekte (5) zur Ladedockfläche (2a, 2b, 2c) und den entsprechenden charakteristischen Informationen angibt.

10. Verfahren nach Anspruch 9, ferner umfassend den Schritt des Bereitstellens eines ersten Signals (FS) durch eine mit dem Computersystem (8) verbundene Beladungssteuerungseinheit (9) als Reaktion auf ein von der Vergleichseinheit (82) des Computersystems (8) bereitgestelltes Warnsignal (WS) im Falle eines Detektierens von zumindest einem Objekt (5), das auf der Oberseite der Ladedockfläche (2a, 2b, 2c) platziert ist, das dieser Ladedockfläche (2a, 2b, 2c) nicht zugeordnet ist.

11. Verfahren nach Anspruch 10, ferner umfassend den Schritt des Bereitstellens eines zweiten Signals (SS) durch die Beladungssteuerungseinheit (9) als Reaktion auf ein von der Vergleichseinheit (82) des Computersystems (8) bereitgestelltes Bestätigungssignal (CS) im Falle des Platzierens von Objekten (5) auf der Oberseite der Ladedockfläche (2a, 2b, 2c), die dieser Ladedockfläche (2a, 2b, 2c) zugeordnet sind.

12. Verfahren nach Anspruch 10 oder 11, ferner umfassend den Schritt des Anzeigens (D) von Informationen über die Objekte (5), die das erste Signal (FS) verursachen, mit einer Anzeige der Beladungssteuerungseinheit (9), die das Entfernen (RM) des Objekts (5) von der Ladedockfläche (2a, 2b, 2c) ermöglicht, bevorzugt zusätzlich Anzeigen der beabsichtigen Ladedockfläche (2a, 2b, 2c) für das Objekt (5), das das erste, von dem Computersystem (8) innerhalb des Warnsignals (WS) bereitgestellte Signal (FS) verursacht.

## Revendications

1. Entrepôt (1), comprenant au moins une zone de chargement (2) dotée d'une surface de chargement (3) accessible à des charriots de manutention (4), afin de placer des objets (5) au-dessus de cette zone de chargement (2), dans lequel les objets (5) destinés à être chargés (L) sur des véhicules de transport (6) comprennent des radio-identifiants (RFID, Radio Frequency Identification, 51) fournissant des informations caractéristiques convenant pour identifier les objets (5),
**caractérisé en ce que**
la zone de chargement (2) comprend au moins un réseau de lecteurs RFID (7) agencés dans ou sous la surface de chargement (3) d'une manière convenant pour ne pas entraver l'entrée des chariots de manutention (4) dans la surface de chargement (3), et dans lequel au moins une partie du réseau de lecteurs RFID (7) définit une zone de quai de chargement séparée (2a, 2b, 2c) pour collecter tous les objets (5) à charger (L) sur un véhicule de transport particulier (6), et fournit un signal radioélectrique (RF) convenant pour la lecture des informations caractéristiques des identifiants RFID (51) des objets (5) placés dans la zone de quai de chargement (2a, 2b, 2c) afin d'identifier les objets (5) non attribués à cette zone de quai de chargement (2a, 2b, 2c), où le signal radioélectrique (RF) fourni par les lecteurs RFID (7) définissant une zone de quai de chargement particulière (2a) présente une distribution spatiale essentiellement verticale par rapport à la surface de chargement (3) avec un angle d'ouverture inférieur à 30° convenant pour réduire au moins significativement une diaphonie de signal avec les signaux radioélectriques (RF) provenant d'autres lecteurs RFID (7) définissant d'autre zones de quai de chargement (2b, 2c), permettant de distinguer entre des objets adjacents (5) placés au-dessus de différentes zones de quai de chargement (2a, 2b, 2c) situées à proximité les unes des autres sans appliquer de procédures d'élimination de diaphonie, dans lequel une puissance radioélectrique (RF) émise par les lecteurs RFID (7) est réglée afin de fournir une distance de détection maximale de 2 mètres pour lire les identifiants RFID (51), dans lequel les lecteurs RFID (7) sont connectés à un système informatique (8) commandant le processus de chargement des objets (5) à l'intérieur de l'entrepôt (1), le système informatique (8) est agencé de manière à adapter la taille et la forme de la zone de quai de chargement (2a, 2b, 2c) sur demande en modifiant le nombre et l'emplacement des lecteurs RFID (7) dans le réseau des lecteurs RFID (7) attribués à cette zone de quai de chargement (2a, 2b, 2c), où les lecteurs RFID (7) situés entre différentes zones de quai de chargement sont éteints.

2. Entrepôt (1) selon la revendication 1,
**caractérisé en ce que**
les lecteurs RFID (7) dans la zone de quai de chargement (2a, 2b, 2c) transmettent (T) les informations caractéristiques lues au système informatique (8), lequel comprend une base de données (81) stockant au moins une liste de chargement spécifiant les objets (5), l'attribution des objets (5) à la zone de quai de chargement (2a, 2b, 2c) et les informations caractéristiques correspondantes afin d'identifier les objets (5), et une unité de comparaison (82) comparant les informations caractéristiques lues des identifiants RFID (51) des objets (5) placés dans la zone de quai de chargement (2a, 2b, 2c) avec les informations caractéristiques lues des objets (5) attribués à cette zone de quai de chargement (2a, 2b, 2c) dans la liste de chargement.

3. Entrepôt (1) selon la revendication 2,
**caractérisé en ce que**
une unité de commande de chargement (9) connectée au système informatique (8) est agencée d'une manière convenant pour fournir un premier signal (FS) en réponse à un signal d'avertissement (WS) fourni par l'unité de comparaison (82) du système informatique (8) en cas de détection d'au moins un objet (5) placé au-dessus de la zone de quai de chargement (2a, 2b, 2c) qui n'est pas attribué à cette zone de quai de chargement (2a, 2b, 2c).

4. Entrepôt (1) selon la revendication 3,
**caractérisé en ce que**
l'unité de commande de chargement (9) est agencée de manière à fournir un second signal (SS) en réponse à un signal de confirmation (CS) fourni par l'unité de comparaison (82) du système informatique (8) en cas de placement d'objets (5) au-dessus de la zone de quai de chargement (2a, 2b, 2c) qui ne sont pas attribués à cette zone de quai de chargement (2a, 2b, 2c).

5. Entrepôt (1) selon la revendication 3 ou 4,
**caractérisé en ce que**
l'unité de commande de chargement (9) est agencée sur chaque zone de quai de chargement (2a, 2b, 2c) ou dans chaque chariot de manutention (4) plaçant des objets (5) sur le dessus zones de quai de chargement (2a, 2b, 2c).

6. Entrepôt (1) selon l'une quelconque des revendications 3 à 5,
**caractérisé en ce que**
l'unité de commande de chargement (9) comprend un affichage convenant pour afficher (D) des informations concernant les objets (5), provoquant le premier signal (FS) activant l'élimination des objets (5) hors de la zone de quai de chargement (2a, 2b, 2c), et de préférence l'affichage affiche la zone de quai de chargement prévue (2a, 2b, 2c) pour l'objet (5), provoquant le premier signal (FS) fourni par le système informatique (8) dans le signal d'avertissement (WS).

7. Entrepôt (1) selon l'une quelconque des revendications précédentes,
**caractérisé en ce que**
le réseau complet de lecteurs RFID (7) définit une zone de quai de chargement.

8. Procédé destiné à faire fonctionner un entrepôt (1) selon la revendication 1, comprenant les étapes consistant à :
- entrer (E) dans une surface de chargement (3) d'une zone de chargement (2) avec un chariot de manutention (4) portant des objets (5) destinés à être chargés (L) sur des véhicules de transport (6), dans lequel les objets (5) comprennent des identifiants RFID (51) fournissant (P) des informations caractéristiques convenant pour identifier les objets (5) ;
- placer (PL) les objets (5) sur le dessus d'un réseau de lecteurs RFID (7) par des chariots de manutention, où au moins une partie des lecteurs RFID (7) définit une zone de quai de chargement séparée (2a, 2b, 2c) pour collecter tous les objets (5) à charger (L) sur un véhicule de transport particulier (6), où le réseau de lecteurs RFID (7) est agencé de manière appropriée dans ou sous la surface de chargement (3) ;
- lire (RO) les informations caractéristiques des identifiants RFID (51) des objets placés dans la zone de quai de chargement (2a, 2b, 2c) afin d'identifier les objets (5) non attribués à cette zone de quai de chargement (2a, 2b, 2c) avec un signal radioélectrique (RF) fourni de manière appropriée par les lecteurs RFID (7) attribués à la zone de quai de chargement (2a, 2b, 2c), où le signal radioélectrique (RF) fourni par les lecteurs RFID (7) définissant une zone de quai de chargement particulière (2a) présente une distribution spatiale essentiellement verticale par rapport à la surface de chargement (3) avec un angle d'ouverture inférieur à 30° convenant pour réduire au moins significativement une diaphonie de signal avec les signaux radioélectriques (RF) provenant d'autres lecteurs RFID (7) définissant d'autres zones de quai de chargement (2b, 2c), et où une puissance radioélectrique (RF) émise par les lecteurs RFID (7) est réglée afin de fournir une distance de détection maximale de 2 mètres pour lire les identifiants RFID (51), permettant de distinguer entre des objets adjacents (5) placés au-dessus de différentes zones de quai de chargement (2a, 2b, 2c) situées à proximité les unes des autres sans appliquer de procédures d'élimination de diaphonie ;
- adapter la taille et la forme de la zone de quai de chargement (2a, 2b, 2c) sur demande en modifiant le nombre et l'emplacement des lecteurs RFID (7) dans le réseau des lecteurs RFID (7) attribués à cette zone de quai de chargement (2a, 2b, 2c) par un système informatique (8), dans lequel les lecteurs RFID (7) sont connectés au système informatique (8) commandant le processus de chargement d'objets (5) dans l'entrepôt (1), et
- éteindre les lecteurs RFID (7) situés entre différentes zones de quai de chargement.

9. Procédé selon la revendication 8, comprenant en outre les étapes consistant à :
- transmettre (T) les informations caractéristiques lues des identifiants RFID (51) au système informatique (8) connecté aux lecteurs RFID (7), et
- comparer (C) les informations caractéristiques des identifiants RFID lus (51) avec une liste de chargement stockée dans une base de données (81) du système informatique (8) spécifiant l'attribution des objets (5) à la zone de quai de chargement (2a, 2b, 2c) et les informations caractéristiques correspondantes.

10. Procédé selon la revendication 9, comprenant en outre l'étape consistant à fournir un premier signal (FS) par une unité de commande de chargement (9) connectée au système informatique (8) en réponse à un signal d'avertissement (WS) fourni par l'unité de comparaison (82) du système informatique (8) en cas de détection d'au moins un objet (5) placé au-dessus de la zone de quai de chargement (2a, 2b, 2c) qui n'est pas attribué à cette zone de quai de chargement (2a, 2b, 2c).

11. Procédé selon la revendication 10, comprenant en outre l'étape consistant à fournir un second signal (SS) par l'unité de commande de chargement (9) en réponse à un signal de confirmation (CS) fourni par l'unité de comparaison (82) du système informatique (8) en cas de placement d'objets (5) au-dessus de la zone de quai de chargement (2a, 2b, 2c) qui ne sont pas attribués à cette zone de quai de chargement (2a, 2b, 2c).

12. Procédé selon la revendication 10 ou 11, comprenant en outre l'étape consistant à afficher (D) des informations concernant les objets (5), provoquant le premier signal (FS) avec un affichage de l'unité de commande de chargement (9) permettant l'élimination (RM) de l'objet (5) hors de la zone de quai de chargement (2a, 2b, 2c), et de préférence à afficher la zone de quai de chargement prévue (2a, 2b, 2c) pour l'objet (5), provoquant le premier signal (FS) fourni par le système informatique (8) dans le signal d'avertissement (WS).
